(19) Europäisches Patentamt
European Patent Office
Office européen des brevets

(11) Publication number: **0 054 845**
**A2**

# (12) EUROPEAN PATENT APPLICATION

(21) Application number: **81110301.9**

(22) Date of filing: **10.12.81**

(51) Int. Cl.³: **C 08 L 71/04**, C 08 L 51/04

(30) Priority: **18.12.80 US 217821**

(43) Date of publication of application: **30.06.82**
**Bulletin 82/26**

(84) Designated Contracting States: **DE FR GB NL**

(71) Applicant: **GENERAL ELECTRIC COMPANY, 1 River Road, Schenectady New York 12305 (US)**

(72) Inventor: **Lee, Gim Fun, Jr., 11 Drawbridge Drive, Albany New York 12203 (US)**

(74) Representative: **Catherine, Alain et al, GETSCO 42, avenue Montaigne, F-75008 Paris (FR)**

(54) **Mineral filled polyphenylene ether compositions having improved properties.**

(57) There are provided compositions comprising a polyphenylene ether resin, a high impact rubber modified polystyrene, a mineral filler other than iron oxide and an effective amount of a plasticizer. Such compositions possess surprisingly improved impact strength in comparison with corresponding compositions in which the plasticizer is not present. In addition, there are provided compositions comprising a polyphenylene ether resin, an impact modifier other than a rubber modified polystyrene, iron oxide and an effective amount of a plasticizer. Such compositions possess improved modulus in comparison with corresponding compositions in which the iron oxide is not present, with good retention of ductility which is unexpected.

EP 0 054 845 A2

0054845

# Mineral filled polyphenylene ether compositions having improved properties

This invention is concerned with compositions comprising a polyphenylene ether resin and a mineral filler. It has been discovered that mineral filled polyphenylene ether compositions can be further modified by including certain selected additives, in one case to improve the impact strength, and in another case to improve the modulus without sacrificing ductility.

The polyphenylene ether resins are well known in the art as comprising a family of thermoplastic materials which are suitable for various engineering purposes. These may be made by catalyzed and non-catalyzed processes which are described in the patent literature, such as in Hay, U.S. 3,306,874 and 3,306,875, and in Stamatoff, U.S. 3,257,357 and 3,257,358 which are incorporated herein by reference.

It is known that the polyphenylene ether resins may be admixed with polystyrene, both unmodified and modified, to produce compositions having properties which are better than those of either of the two polymers individually. Such compositions are disclosed in Cizek, U.S. 3,383,435, the disclosure of which is incorporated herein by reference.

To reduce the cost, it has been proposed to add mineral fillers such as aluminum silicate, calcium carbonate, talc or zinc oxide, to compositions containing a polyphenylene ether resin and polystyrene. Compositions comprising a polyphenylene ether resin, a rubber modified high impact styrene resin and aluminum silicate are disclosed in U.S. 4,166,812. Such compositions are described as having improved toughness. Copending application Serial N° 755,025, filed December 28, 1976, discloses compositions comprising a polyphenylene ether resin, alone, or in combination with an impact modifier which is not a high impact rubber modified polystyrene, a mineral filler and a plasticizer.

Inexpensive fillers are often added to plastics to reduce cost, but often result in reduced impact strength. It has now been discovered that the addition of a plasticizer

to mineral filled, e.g., clay filled, compositions comprising a polyphenylene ether resin and a high impact rubber modified polystyrene results in improved impact strength, thus providing reduced cost as well as property improvement.

It has also been discovered that a new class of mineral fillers, namely iron oxides, provide good ductility in compositions comprising a polyphenylene ether resin, impact modifiers and a plasticizer. Because the iron oxides are useful as pigments, this invention provides the capability for producing a variety of colored mineral filled materials having good ductility.

According to this invention, there are provided thermoplastic compositions comprising :

(a) a polyphenylene ether resin,
(b) a high impact, rubber modified polystyrene,
(c) a mineral filler which is not an iron oxide ; and
(d) an effective amount of a plasticizer.

The mineral filler can be selected from a wide variety of materials. Examples include talc, clay (hydrated or anhydrous), zinc oxide, titanium dioxide, antimony oxide, barium sulphate, calcium carbonate and zinc sulfide. Among these, clay is preferred.

The mineral filler is present in such compositions preferably in amounts in the range between 15 and 50 parts by weight, more preferably between 20 and 35 parts by weight, based on the weight of (a), (b) and (d) combined.

In another aspect of this invention, there are provided compositions comprising :

(a) a polyphenylene ether resin ;
(b) an impact modifier which is not a high impact, rubber modified polystyrene ;
(c) iron oxide in an amount sufficient to give good retention of ductility ; and
(d) an effective amount of a plasticizer.

In the foregoing compositions, the iron oxide preferably is present in amounts in the range between 15 and 50 parts by weight, based on the total weight of (a), (b) and (d).

The term "polystyrene" is used herein in the same manner as defined in Cizek, U.S. 3,383,435. Such styrene resins will be combinable with the polyphenylene ether and, in general, will be selected from those having at least 25 % by weight of the polymer units derived from a vinyl aromatic monomer, e.g., one having the formula :

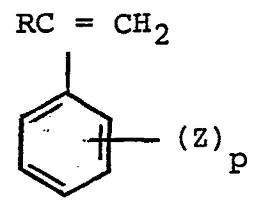

wherein R is hydrogen, (lower) alkyl, e.g., of from 1 to 4 carbon atoms or halogen ; Z is hydrogen, vinyl, halogen or (lower) alkyl ; and p is 0 or a whole number of from 1 to 5. Illustrative polystyrene resins include homopolymers of polystyrene ; polychlorostyrene ; poly-α -methylstyrene ; and the like ; styrene—containing copolymers, such as styrene-acrylonitrile copolymers ; copolymers of ethylvinylbenzene and divinylbenzene ; styrene-acrylonitrile-α -methylstyrene terpolymers, and the like. Preferred polystyrene resins of this class are homopolystyrene ; poly-α -methylstyrene ; styrene-acrylonitrile copolymers ; styrene-α -methylstyrene copolymer ; styrene-methyl methacrylate copolymer ; poly-α -chlorostyrene and styrene-maleic anhydride copolymers. Especially preferred is homopolystyrene.

The term "rubber" as used herein includes polymeric materials, natural and synthetic, which are elastomers at room temperatures, e.g., 20° to 25°C. The term "rubber" includes, therefore, natural or synthetic rubbers of the type generally used in preparing impact polymers. All such rubbers will form a two phase system with the resin, e.g., a polystyrene resin, and will comprise the discontinuous particulate phase in the impact resistant polystyrene resin composition. Illustrative rubbers for use in this invention are natural rubber and polymerized diene rubbers, e.g., polybutadiene, polyisoprene, and the like, and copolymers of such dienes with vinyl monomers, e.g., vinyl aromatic monomers, such as

BAD ORIGINAL

styrene. Examples of suitable rubbers or rubbery copolymers are neutral crepe rubber, synthetic SBR type rubber containing from 40 to 98 % by weight of butadiene and from 60 to 2 percent by weight of styrene prepared by either hot or cold emulsion polymerization, synthetic GR-N type rubber containing from 65 to 82 percent by weight of butadiene and from 35 to 18 percent by weight of acrylonitrile, and synthetic rubbers prepared from, for example, butadiene, butadiene-styrene or isoprene by methods, e.g., those employing heterogeneous catalyst systems, such as a trialkylaluminum and a titanium halide. Among the synthetic rubbers which may be used in preparing the present compositions are elastomeric modified diene homopolymers, e.g., hydroxy- and carboxy-terminated polybutadienes ; poly-chlorobutadienes, e.g., neoprenes ; polyisobutylene, and copolymers of isobutylene with butadiene or isoprene ; polyisoprene ; copolymers of ethylene and propylene and interpolymers thereof with butadiene ; thiokol rubbers ; polysulfide rubbers ; acrylic rubbers ; polyurethane rubbers ; copolymers of dienes, e.g., butadiene and isoprene, with various comonomers, such as alkyl unsaturated esters, e.g., methyl methacrylate ; unsaturated ketones, e.g., methylisopropenyl ketone, vinyl heterocyclics, e.g., vinyl pyridine; polyether rubbers ; epichlorohydrin rubbers and the like. The preferred rubbers comprise polybutadiene and rubber copolymers of butadiene with styrene. Such preferred rubbers are widely used in forming rubber modified high impact polystyrene resins with the broad range of elastomeric particle sizes mentioned in the above-cited references.

The term "rubber modified polystyrene resin" defines a class of compounds comprising a two-phase system in which rubber is dispersed in a polystyrene resin matrix in the form of discrete particles. The particles can be formed by a mechanical blending of the rubber and the polystyrene resin and in this case the particles will comprise a dispersed ungelled elastomeric phase. On the other hand, and as it preferred, the two-phase system will consist of interpolymers of a styrene monomer and an elastomer or rubber. Commercially, such high impact polystyrenes are usually made by grafting of rubber in the presence of polymerizing styrene. Such

systems consist of a continuous phase of the polymerized styrene monomer in which the rubber or elastomer is dispersed in a discontinuous elastomeric gel phase, with or without grafted chains of polymerized styrene monomer. The particles may contain occluded, polymerized styrene monomer, too, and this has some bearing on their size.

The impact modifiers other than high impact rubber modified polystyrenes are comprised of any one of a number of elastomeric polymerized diene blends, and copolymers comprising grafts, block, radial, etc., structures known in this art under the general term "resin impact modifiers". Illustratively, they will comprise a compound selected from :

(i) an A-B-A block copolymer wherein terminal blocks A comprise a polymerized vinyl aromatic compound and center blocks B comprise a polymerized diene hydrocarbon, or a hydrogenated derivative thereof ;

(ii) a radial teleblock copolymer comprising polymerized vinyl aromatic blocks and polymerized diene hydrocarbon blocks, or a hydrogenated derivative thereof ;

(iii) an A-B block copolymer wherein block A comprises a polymerized vinyl aromatic compound and block B comprises a polymerized diene hydrocarbon, or a hydrogenated derivative thereof ;

(iv) a rubber modified styrene resin comprising at least 20 parts by weight of a polymerized diene hydrocarbon and graft polymerized vinyl aromatic compound, or a hydrogenated derivative thereof ; and

(v) a graft copolymer of an acrylic ester, alone, or in combination with a vinyl aromatic compound and a polymerized diene hydrocarbon, or a halogenated derivative thereof.

The A-B-A block copolymers of vinyl aromatic hydrocarbon and a diene hydrocarbon (b) (i) are well known in the art and commercially available. These are describes, for instance, in "Polymer Chemistry of Synthetic Elastomers", edited by Kennedy et al, Interscience Publishers, Vol. 23, Part II (1969), pages 553-559, the disclosure of which is incorporated herein by reference. Other descriptions are

BAD ORIGINAL

given in Zelinski, U.S. 3,251,905 and Holden et al, U.S. 3,231,635 which are also incorporated herein by reference.

In general, component (b) (i) is a block copolymer of A-B-A type in which terminal block A, which can be the same or different, are thermoplastic homopolymers or polymers prepared from a vinyl aromatic compound wherein true aromatic moiety can be either mono- or polycyclic. Examples include styrene, alpha-methylstyrene, vinyl toluene, vinyl xylene, ethyl vinyl xylene, vinyl naphthalene and the like, or mixtures thereof.

Center block B is an elastomeric polymer derived from a diene hydrocarbon, preferably a conjugated diene, e.g., 1,3-butadiene, 2,3-dimethyl butadiene, isoprene, 1,3-pentadiene and the like, or mixture thereof.

If desired, the block polymers can be post-treated to hydrogenate the rubber portion of the polymer.

Hydrogenation can be carried out with a variety of hydrogenation catalysts, such as nickel on Kieselguhr, Raney nickel, copper chromate, molybdenum sulfate and finely divided platinum or other noble metals on a low surface area catalyst.

The hydrogenated block polymers are described further in Jones, U.S. 3,431,323 and De LaMare et al, U.S. 3,670,054, both of which are incorporated herein by reference.

In preferred compositions, component (d) (i) comprises an A-B-A block copolymer of polystyrene-polybutadiene-polystyrene or polystyrene-polyisoprene-polystyrene type wherein the polybutadiene or polyisoprene portion can be either hydrogenated or non-hydrogenated.

The radial teleblock copolymers can be made by means known in this art and they are also commercially available. As an illustration, they can be made by polymerizing conjugated dienes, e.g., butadiene, and vinyl aromatic compounds, e.g., styrene in the presence of an organometallic initiator, e.g., n-butyllithium, to produce copolymers which contain an active metal atom, such as lithium, on one end of each of the polymer chains. These metal atom-terminated polymer are then reacted with a coupling agent which as at

least three active sites capable of reacting with the carbon-metal atom bonds on the polymer chains and replacing the metal atoms on the chains . This results in polymers which have relatively long branches which radiate from a nucleus formed by the polyfunctional coupling agent.

Such a method of preparation is described in detail in Zelinski et al, U.S. 3,281,383, which is incorporated herein by reference.

The coupling agents for the teleblock copolymers can be chosen from among polyepoxides, polyisocyanates, polyimines, polyaldehydes, polyketones, polyanhydrides, polyesters, polyhalides and the like. These materials can contain two or more types of functional groups, such as the combination of epoxy and aldehyde groups or isocyanate and halide groups. The coupling agents are described in detail in the above-mentioned U.S. Pat. N° 3,281,383.

The conjugated dienes of the radial teleblock copolymer include compounds such as 1,3-butadiene, isoprene, 2,3-dimethyl-1,3-butadiene, 1,3-pentadiene, 3-butyl-1,3-octadiene, and the like. The vinyl aromatic polymers may be prepared from vinyl aromatic compounds which include styrene, 1-vinyl-naphthalene, 2-vinylnaphthalene and the alkyl, cycloalkyl, aryl, alkaryl and aralkyl derivatives thereof. Examples include 3-methylstyrene, 4-n-propylstyrene, 4-cyclohexylstyrene, 4-4-(4-phenyl-n-butyl) styrene, and the like.

Preferred radial teleblock copolymers are Solprene 406 (containing about 60 parts of weight of butadiene units and about 40 parts by weight of styrene units). Solprene 411 (containing about 70 parts by weight of butadiene units and about 30 parts by weight of styrene units). Solprene 414 (containing about 60 parts by weight of butadiene units and about 40 parts by weight of styrene units), and S411P (containing about 60 parts by weight of butadiene units and about 30 parts by weight of styrene units). These materials also include a relatively minor amount of coupling agent, e.g., less than 1 part by weight of coupling agent per 100 parts of polymer.

The graft copolymers or acrylic ester and diene rubber can be made by means known in the art and they are also commercially available, e.g., from Rohm & Haas Co., Philadelphia, Pa., under the trade designation Acryloid KM 611.

The graft polymerization product of an acrylic monomer and a diene rubber preferably comprises (1) from about 20-80 % by weight of a backbone polymer of the units of butadiene or butadiene styrene, wherein the butadiene units are present in quantities of at least 40 % by weight of the backbone polymer, (2) 80-20 % by weight of an acrylic monomer graft polymerized to (1) ; said acrylic monomer units being selected from the group consisting of lower alkyl methacrylates, alicyclic methacrylates and alkyl acrylates, and (3) 0 to 60 % by weight of a styrene monomer graft polymerized to (1) or (2) ; sequentially or simultaneously with the polymerization of (2).

The graft polymerization product of an acrylic monomer alone or with styrene monomer and the rubbery diene polymer or copolymer may be prepared by known techniques, typically by emulsion polymerization. They may be formed from a styrene-butadiene copolymer latex and a monomeric material such as methyl methacrylate alone or with another compound having a single vinylidene group copolymerizable therewith, e.g., styrene. For example, in the preparation of a representative material, 85-65 parts by weight of monomeric methyl methacrylate or monomeric methyl methacrylate to the extent of at least 55 % and preferably as much as 75 % by weight in admixture with another monomer which copolymerizes therewith, such as ethyl acrylate, acrylonitrile, vinylidene chloride, styrene, and similar unsaturated compounds containing a single vinylidene group, is added to 15-35 parts by weight of solids in a styrenebutadiene copolymer latex. The copolymer solids in the latex comprise about 10-50 % by weight of styrene and about 90-50 % by weight of butadiene and the molecular weight thereof is within the range of about 25,000 to 1,500,000. The copolymer latex of solids in water contains a dispersing agent such as sodium oleate or the like to maintain the copolymer in

emulsion. Interpolymerization of the monomer or monomeric mixture with the copolymer solids emulsified in water is brought about in the presence of a free-radical generating catalyst and a polymerization regulator which serves as a chain transfer agent, at a temperature of the order of 15°C to 80°C. Coagulation of the interpolymerized product is then effected with a calcium chloride solution, for instance, whereupon it is filtered, washed and dried. Other graft copolymers and differing from the above only in the ratio of monomeric material solely or preponderantly of methyl methacrylate to the butadiene-styrene copolymer latex in the presence of which it is polymerized extends from 85-25 parts by weight of the former to 15-75 parts by weight of the latter. These materials may extend in physical properties from relatively rigid compositions to rubbery conditions. A preferred commercially available material is Acryloid KM 611 which is sold by Rohms & Haas. Also, U.S. Patent N° 2,943,074 and 2,857,360, which are incorporated by reference, contain additional information as to the preparation of these materials. A preferred material is described in U.S. 2,943,074, column 4, preparation "D" and converted to emulsified polymer "B" as described therein.

The preferred polyphenylene ether resins are those having the formula :

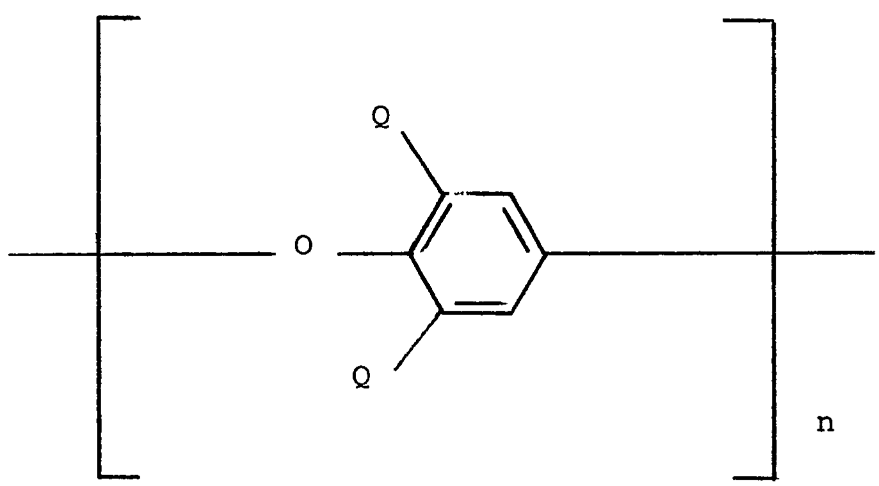

wherein the oxygen ether atom of one unit is connected to the benzene nucleus of the next adjoining unit, n is a positive integer and is at least 50, and each Q is a monovalent substituent selected from the group consisting of hydrogen, halogen, hydrocarbon radicals free of a tertiary alpha-carbon atom, halohydrocarbon radicals having at least two carbon atoms between the halogen atom and the phenyl nucleus, hydrocarbonoxy radicals, and halohydrocarbonoxy radicals having at least two carbon atoms between the halogen atom and the phenyl nucleus.

The preparation of polyphenylene ether resins corresponding to the above formula is described in the above-mentioned patents of Hay and Stamatoff.

The most preferred polyphenylene ether resin for use in this invention is poly(2,6-dimethyl-1,4-phenylene) ether.

The styrene resin should have at least 25 percent of its units derived from an alkenyl aromatic monomer of the formula :

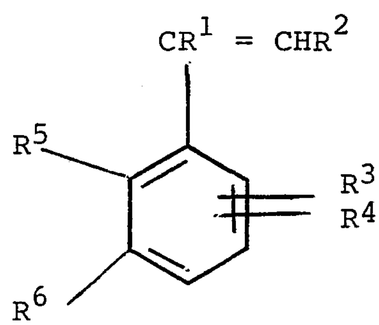

wherein $R^1$ and $R^2$ are selected from the group consisting of hydrogen and lower alkyl or alkenyl groups of from 1 to 6 carbon atoms ; $R^3$ and $R^4$ are selected from the group consisting of chloro, bromo, hydrogen, and lower alkyl groups of from 1 to 6 carbon atoms and $R^5$ and $R^6$ are selected from the group consisting of hydrogen and lower alkyl and alkenyl groups of from 1 to 6 carbon atoms.

Specific examples include styrene, bromostyrene, chlorostyrene and $\alpha$-methylsyrene. Especially preferred for use herein is styrene.

The plasticizer can be selected from among any material known to impart flexibility. Preferably, the plasticizer is an aromatic phosphate, and especially a compound having the formula :

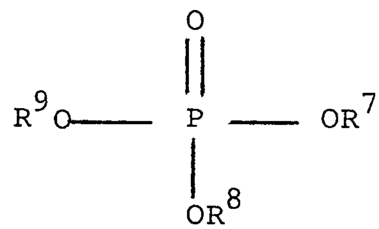

wherein $R^7$, $R^8$ and $R^9$ are the same or different and are alkyl, haloalkyl, cycloalkyl, halocycloalkyl, aryl, haloaryl, alkyl substituted aryl, haloalkyl substituted aryl, aryl substituted alkyl, haloaryl substituted alkyl, hydroxyalkyl, hydroxyaryl, hydroxyalkaryl, halogen and hydrogen, provided that at least one of $R^7$, $R^8$ and $R^9$ is always aryl.

Examples include cresyl diphenyl phosphate, 2-ethylhexyl diphenyl phosphate, tricresyl phosphate, tri-isopropylphenyl phosphate, triphenyl phosphate, dibutyl phenyl phosphate, cresyl diphenyl phosphate, isooctyl diphenyl phosphate, 2-ethylhexyl diphenyl phosphate, isodecyl diphenyl phosphate, isodecyl dicresyl phosphate, dedecyl cresyl phosphate, di-n-octyl phenyl phosphate and di-2-ethylhexyl phenyl, or mixtures thereof. Especially preferred is triphenyl phosphate.

In all of the foregoing compositions of this invention, the plasticizer is preferably present in an amount in the range between 5 and 35, more preferably, 15 to 30 parts by weight, based on (a), (b) and (c) combined.

The polyphenylene ether resin and the high impact, rubber modified polystyrene or other impact modifier can be present in virtually any amount, e.g., from 1 to 99 parts by weight of polyphenylene ether to 99 to 1 part by weight of polystyrene.

Other ingredients, such as stabilizers, flame retardant agents, drip retardants, antioxidants, coloring agents, pigments, mold release agents, and the like, can also be included in the compositions for their conventionally employed purpose.

The compositions of this invention are prepared conventionally in any manner. Usually, however, the ingredients are formed into a preblend by tumbling in a mixer, the preblend is extruded at a temperature of from 232 to 316°C, the extrudate is cut into smaller pieces, and the pieces are injection molded at a temperature of from 219 to 288°C.

The compositions of this invention are illustrated in the following examples, which are not intended to be limiting.

EXAMPLES 1-4

Compositions according to this invention are prepared by tumbling the ingredients, extruding at a temperature of 288°C. and injection molding at a temperature of 260°C, mold temperature 88°C.

The compositions after molding are evaluated for physical properties using standard ASTM procedures. The compositions and physical properties are summarized in Table 1.

TABLE 1 - Compositions comprising a polyphenylene ether resin, a high impact rubber modified polystyrene, a mineral filler and a plasticizer.

| | 1 | 2 | 3 | 4 | A* |
|---|---|---|---|---|---|
| Ingredients, parts by weight | | | | | |
| Poly (2,6-dimethyl-1,4-phenylene)ether[a] | 40 | 40 | 40 | 40 | 40 |
| High impact, rubber-modified polystyrene [b] | 50 | 60 | 60 | 60 | 60 |
| Plasticizer (triphenyl phosphate) | 3 | 6 | 9 | 12 | -- |
| Mineral filler (clay)[c] | 25 | 25 | 25 | 25 | 25 |
| Polyethylene | 1.5 | 1.5 | 1.5 | 1.5 | 1.5 |
| Tridecyl phosphite | 0.5 | 0.5 | 0.5 | 0.5 | 0.5 |
| Zinc sulfide | 0.15 | 0.15 | 0.15 | 0.15 | 0.15 |
| Zinc oxide | 0.15 | 0.15 | 0.15 | 0.15 | 0.15 |
| Physical properties | | | | | |
| Tensile, yield, $daN/mm^2$ | 6.27 | 5.72 | 5.17 | 4.96 | 6.20 |
| Tensile elongation, % | 38 | 48 | 66 | 62 | 42 |
| Notched izod impact strength, J/cm | 0.694 | 0.747 | 0.747 | 0.747 | 0.694 |
| Gardner impact strength, J | 0.345 | 1.09 | 1.03 | 1.15 | 0.345 |
| Flexural modulus, $daN/mm^2$ | 401.2 | 384 | 352.3 | 329.5 | 368.8 |
| Flexural strength, $daN/mm^2$ | 8.96 | 8.20 | 7.44 | 6.96 | 9.03 |

* comparison experiment

a General Electric's PPO, having an intrinsic viscosity of 0.46 deciliters per gram in chloroform at 30°C.

b Foster Grant's FG 834, a polystyrene containing about 9 percent by weight of polybutadiene.

c Freeport Kaolin, NCF.

It can be seen that the addition of an aromatic phosphate in amounts of 6 parts by weight or more results in a marked improvement in the Gardner impact strength, which is surprising.

EXAMPLES 5 and 6

Using the procedures described in Examples 1-4, additional compositions according to this invention are prepared, molded and evaluated for physical properties after molding. The compositions and physical properties are summarized in Table 2.

TABLE 2 - Compositions comprising a polyphenylene ether resin, an impact modifier, a plasticizer and iron oxide

| Ingredients, parts by weight | 5 | 6 |
|---|---|---|
| Poly(2,6-dimethyl-1,4-phenylene)ether[a] | 78 | 78 |
| Impact improver[d] | 5 | 5 |
| Plasticizer (triphenyl phosphate) | 22 | 22 |
| Iron oxide (I)[e] | 43 | -- |
| Iron oxide (II)[f] | -- | 43 |
| Polyethylene | 1.5 | 1.5 |
| Tridecyl phosphite | 0.5 | 0.5 |
| Zinc sulfide | 0.15 | 0.15 |
| Zinc oxide | 0.15 | 0.15 |
| **Physical properties** | | |
| Tensile yield, daN/mm$^2$ | 6.68 | 5.86 |
| Tensile strength, daN/mm$^2$ | 5.93 | 5.72 |
| Tensile elongation, % | 49 | 79 |
| Notched izod impact strength, J/cm | 0.907 | 1.44 |
| Gardner impact strength, J | 1.73 | 2.88 |
| Flexural modulus, daN/mm$^2$ | 306.77 | 246.8 |
| Flexural strength, daN/mm$^2$ | 9.51 | 8.27 |

a General Electric's PPO, same as in Examples 1-4.
d Shell Chemical's Kraton 1101 (an unhydrogenated styrene-butadiene-styrene block copolymer).
e Mapico's Tan 20 pigment.
f Mapico's Red 617 pigment

Other modifications and variations of the present invention are possible in view of the foregoing description. It is to be understood, therefore, that changes may be made in the particular embodiments of the invention without departing from the principles or scope of the invention defined in the appended claims and without sacrificing the chief benefits.

# CLAIMS

1. A thermoplastic composition comprising :

(a) a polyphenylene ether resin ;

(b) a high impact, rubber-modified polystyrene ;

(c) a mineral filler which is not an iron oxide; and

(d) an effective amount of a plasticizer.

2. A composition as defined in claim 1, in which the plasticizer is present in an amount in the range between 5 and 35 parts by weight, based on 100 parts by weight of (a), (b) and (c) combined.

3. A composition as defined in claim 1, in which the plasticizer is an aromatic phosphate.

4. A composition as defined in claim 1, in which the plasticizer is triphenyl phosphate.

5. A composition as defined in claim 1, in which the mineral filler is present in an amount in the range between 15 and 50 parts by weight, based on 100 parts by weight of (a), (b) and (d) combined.

6. A composition as defined in claim 1, in which the mineral filler is clay.

7. A composition as defined in claim 1, in which the polyphenylene ether resin has the formula :

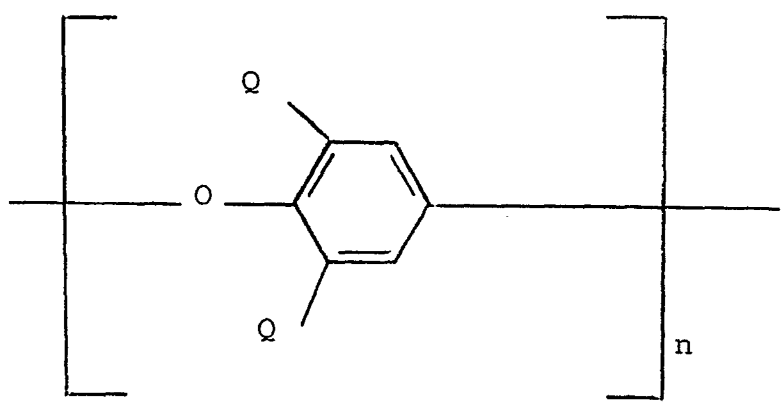

wherein the oxygen ether atom of one unit is connected to the benzene nucleus of the next adjoining unit, n is a positive integer and is at least 50, and each Q is a monovalent substituent selected from the group consisting of hydrogen, halogen, hydrocarbon radicals free of a tertiary alpha-carbon atom, halohydrocarbon radicals having at least

two carbon atoms between the halogen atom and the phenyl nucleus, hydrocarbonoxy radicals, and halohydrocarbonoxy radicals having at least two carbon atoms between the halogen atom and the phenyl nucleus.

8. A composition as defined in claim 7, in which the polyphenylene ether resin is poly(2,6-dimethyl-1,4-phenylene)ether.

9. A composition as defined in claim 1, in which the styrene resin has at least 25 percent of its units derived from an alkenyl aromatic monomer of the formula :

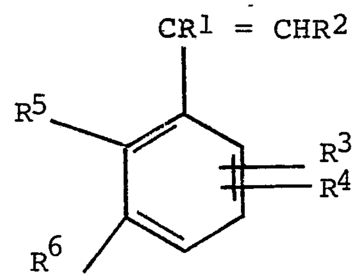

wherein $R^1$ and $R^2$ are selected from the group consisting of hydrogen and lower alkyl or alkenyl groups of from 1 to 6 carbon atoms ; $R^3$ and $R^4$ are selected from the group consisting of chloro, bromo, hydrogen, and lower alkyl groups of from 1 to 6 carbon atoms and $R^5$ and $R^6$ are selected from the group consisting of hydrogen and lower alkyl and alkenyl groups of from 1 to 6 carbon atoms.

10. A thermoplastic composition comprising :
(a) a polyphenylene ether resin ;
(b) an impact modifier which is not a high impact, rubber-modified polystyrene ;
(c) iron oxide ; and
(d) an effective amount of a plasticizer.

11. A composition as defined in claim 10, in which the iron oxide is present in an amount in the range between 15 and 50 parts by weight, based on 100 parts by weight of (a), (b) and (d) combined.

12. A composition as defined in claim 10, in which the plasticizer is present in an amount in the range between 5 and 35 parts by weight, based on 100 parts by weight of (a), (b) and (c) combined.

13. A composition as defined in claim 10, in which the plasticizer is an aromatic phosphate.

14. A composition as defined in claim 10, in which the plasticizer is triphenyl phosphate.

15. A composition as defined in claim 10, in which the impact modifier is a block copolymer of styrene and butadiene.

16. A composition as defined in claim 10, in which the polyphenylene ether resin has the formula :

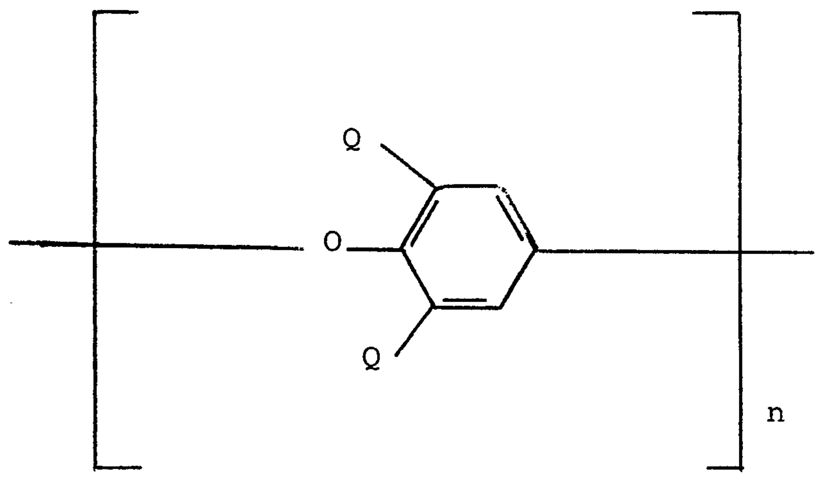

wherein the oxygen ether atom of one unit is connected to the benzene nucleus of the next adjoining unit, n is a positive integer and is at least 50, and each Q is a monovalent substituent selected from the group consisting of hydrogen, halogen, hydrocarbon radicals free of a tertiary alpha-carbon atom, halohydrocarbon radicals having at least two carbon atoms between the halogen atom and the phenyl nucleus, hydrocarbonoxy radicals, and halohydrocarbonoxy radicals having at least two carbon atoms between the halogen atom and the phenyl nucleus.

17. A composition as defined in claim 16, in which the polyphenylene ether resin is poly(2,6-dimethyl-1,4-phenylene)ether.